# EUROPÄISCHE PATENTANMELDUNG

(11) **EP 4 599 748 A1**
(43) Veröffentlichungstag der Anmeldung: **13.08.2025**
(21) Anmeldenummer: 25154865.7
(22) Anmeldetag: 30.01.2025
(51) Int. Cl.: A47L 11/40

(54) **GENERATOR ZUR BEREITSTELLUNG VON REINIGUNGSMITTEL**

(30) Priorität: 08.02.2024 DE 102024201154
(71) Anmelder: BSH Hausgeräte GmbH, 81739 München (DE)
(72) Erfinder: Fremerey, Maximilian, 97633 Saal (DE); Richter, Simon, 36129 Gersfeld (DE); Fleischhauer, Bernward, 97616 Bad Neustadt (DE)

(57) **Zusammenfassung**

Ein Generator (110) für Reinigungsmittel umfasst einen ersten Behälter (150) zur Aufnahme einer ersten Flüssigkeit; einen zweiten Behälter (150) zur Aufnahme einer zweiten Flüssigkeit; ein Reaktionsgefäß (120) mit Elektroden (130) zur elektrolytischen Erzeugung von Reinigungsmittel auf der Basis der ersten und der zweiten Flüssigkeit; sowie eine Steuervorrichtung (170) zur Führung von erster und zweiter Flüssigkeit in das Reaktionsgefäß (120).

## Beschreibung

Die vorliegende Erfindung betrifft die Bereitstellung von Reinigungsmittel am Ort eines Bedarfs. Insbesondere betrifft die Erfindung einen Generator für die Bereitstellung von Reinigungsmittel.

In einem Haushalt wird zur Reinigung einer Bodenfläche Wasser mit einem Reinigungsmittel verwendet. Das Reinigungsmittel soll eine Verunreinigung auf der Bodenfläche ablösen, sich mit ihr verbinden und zusammen mit Wasser von der Oberfläche entfernt werden. Die Bodenfläche kann manuell oder mittels eines automatischen Bodenreinigers behandelt werden.

Zur Entfernung von Verunreinigungen verfügt das Reinigungsmittel über sogenannte aktive Komponenten. Diese können beispielsweise Tenside, Säuren oder Basen umfassen. Bei korrekter Anwendung und Dosierung kann die Verwendung von Reinigungsmitteln zu guten und hygienischen Reinigungsergebnissen führen. Ein Benutzer kann Reinigungsmittel zu hoch dosieren, so dass mehr Reinigungsmittel als erforderlich eingesetzt wird. Unverbrauchtes Reinigungsmittel kann ins Abwasser gelangen und muss in einem aufwendigen Klärungsprozess daraus wieder entfernt werden.

Es wurde vorgeschlagen, Reinigungsmittel erst unmittelbar an dem Ort bereitzustellen, an dem es eingesetzt werden soll. Beispielsweise kann ein Ozongenerator bzw. eine Kaltplasmaquelle aus Luft ein ionisierendes Gas herstellen, welches neben Ozon verschiedene Nitrat- und Nitritverbindungen enthält. Dieses Gas kann in Wasser eingeleitet werden, sodass u. a. geringe Anteile an Wasserstoffperoxid und Salpetersäure gebildet werden. Die so entstehende Reinigungslösung kann effektiv gegen Schmutz wirken und Mikroorganismen inaktivieren.

Bestehende Techniken können die Handhabung aggressiver Chemikalien erfordern. Für einen Benutzer kann es schwierig sein, die Chemikalien korrekt zu dosieren. Manche Chemikalien liegen in einer Form vor, die eine automatische Verarbeitung, insbesondere die Steuerung des Erzeugungsprozesses für Reinigungsmittel, erschweren.

Der vorliegenden Erfindung liegt die Aufgabe zugrunde, eine verbesserte Technik anzugeben, um Reinigungsmittel bedarfsgesteuert bereitzustellen. Die Erfindung löst diese Aufgabe mittels der Gegenstände der unabhängigen Ansprüche. Unteransprüche geben bevorzugte Ausführungsformen wieder.

Ein Generator für Reinigungsmittel umfasst einen ersten Behälter zur Aufnahme einer ersten Flüssigkeit; einen zweiten Behälter zur Aufnahme einer zweiten Flüssigkeit; ein Reaktionsgefäß mit Elektroden zur elektrolytischen Erzeugung von Reinigungsmittel auf der Basis der ersten und der zweiten Flüssigkeit; sowie eine Steuervorrichtung zur Führung von erster und zweiter Flüssigkeit in das Reaktionsgefäß.

Die elektrolytische Bereitstellung von Reinigungsmittel auf der Basis von zwei Flüssigkeiten kann eine erheblich erleichterte oder verbesserte Steuerung erlauben. Eine vorbestimmte Menge bzw. ein vorbestimmter Volumenstrom von Reinigungsmittel kann verbessert bereitgestellt werden. Ein Mischungsverhältnis von Reaktionspartnern aus dem ersten und dem zweiten Behälter kann leichter oder genauer gesteuert werden. Probleme bei der Förderung oder Dosierung von Festkörpern oder Gasen können vermieden werden. Insgesamt kann die Bereitstellung von Reinigungsmittel verbessert kontrolliert werden.

Der Generator kann eine erste Zugabeeinrichtung zur Dosierung erster Flüssigkeit aus dem ersten Behälter in das Reaktionsgefäß umfassen. Die erste Zugabeeinrichtung kann dazu eingerichtet sein, bei Ansteuerung ein vorbestimmtes Volumen bzw. einen vorbestimmten Volumenstrom der ersten Flüssigkeit in das Reaktionsgefäß zu verbringen. In einer einfachen Ausführungsform umfasst die erste Zugabeeinrichtung ein Ventil und ein Strom von Flüssigkeit durch das Ventil kann durch Schwerkraft bewirkt sein oder der erste Behälter kann unter einen vorbestimmten Druck gesetzt sein, um die erste Flüssigkeit in Richtung des Reaktionsgefäßes zu treiben. Das Ventil kann in einer beliebigen Bauform vorgesehen sein. Aus Gründen der Einfachheit ist bevorzugt, dass das Ventil als Schaltventil ausgeführt ist, ein Proportionalventil ist jedoch ebenfalls möglich. In einer anderen Ausführungsform kann die erste Zugabeeinrichtung auch durch einen anderen Aktor realisiert sein, beispielsweise eine Pumpe.

Der Generator kann ferner eine zweite Zugabeeinrichtung zur Dosierung zweiter Flüssigkeit aus dem zweiten Behälter in das Reaktionsgefäß umfassen. Für die zweite Zugabeeinrichtung gelten im Wesentlichen die bezüglich der ersten Zugabeeinrichtung dargelegten Optionen.

Eine Zugabeeinrichtung kann auch eine Pumpe, bevorzugt eine Verdrängerpumpe, eine Strömungspumpe und/oder eine Strahlpumpe umfassen. Die Verdrängerpumpe kann auch Dosierpumpe genannt werden und eine Kammer umfassen, die mit Flüssigkeit aus dem ersten Behälter gefüllt werden kann, bevor die Kammer in das Reaktionsgefäß entleert wird. Beispielhafte Ausführungsformen umfassen eine Kolbenpumpe, eine Zahnradpumpe, eine Membranpumpe oder peristaltische Pumpe. Durch den Einsatz einer Verdrängerpumpe kann eine Dosierung der Flüssigkeit in das Reaktionsgefäß erleichtert sein.

Besonders bevorzugt umfasst eine Zugabeeinrichtung eine peristaltische Pumpe. die peristaltische Pumpe kann einen Schlauch umfassen, der von einem der Behälter zum Reaktionsgefäß führt. Die peristaltische Pumpe kann den Schlauch derart verformen, dass die zu fördernde Flüssigkeit durch äußere mechanische Verformung des Schlauchs durch diesen hindurchgedrückt wird. Eine peristaltische Pumpe kann einfach aufgebaut sein, ist unempfindlich gegenüber dem zu fördernden Medium und erlaubt es, ein vollständig geschlossenes hydraulisches System zu realisieren. Die peristaltische Pumpe kann sich zur Dosierung geförderter Flüssigkeit eignen, trockenlaufsicher oder selbstsperrend sein. Die Förderung eines Gemisches aus Flüssigkeit und Gas oder Festkörper kann unproblematisch sein. Der Schlauch kann als Verschleißteil ausgelegt und einfach auszutauschen sein.

In einer Ausführungsform ist eine mit dem Reaktionsgefäß verbundene Ausgabevorrichtung zur Bereitstellung eines vorbestimmten Volumenstroms von Flüssigkeit mit Reinigungsmittel aus dem Reaktionsgefäß vorgesehen. Die Ausgabevorrichtung kann ebenfalls eine Verdrängerpumpe, eine Strömungspumpe und/oder eine Strahlpumpe umfassen, weiter bevorzugt eine Membranpumpe oder eine peristaltische Pumpe. Die Ausgabevorrichtung kann entfallen, wenn das Reaktionsgefäß abgeschlossen ist und Zuflüsse von Flüssigkeiten aus den Behältern kontrolliert werden können. In diesem Fall kann so viel Flüssigkeit aus dem Reaktionsgefäß austreten wie aus den Behältern in ihn eingetragen wird.

Der zweite Behälter kann dazu eingerichtet sein, eine Flüssigkeit und ein feststoffliches Salz aufzunehmen. Das Salz und die Flüssigkeit können von einem Benutzer in den zweiten Behälter eingefüllt werden. Das Salz kann in dem zweiten Behälter in der Flüssigkeit aufgelöst werden. Der Behälter kann so beschaffen sein, dass eventuell nicht aufgelöstes Salz nicht zusammen mit Flüssigkeit in das Reaktionsgefäß übernommen wird. Beispielsweise kann ein Auslass für Flüssigkeit tiefer als ein Aufnahmekorb für das Salz im zweiten Behälter liegen.

Nach einem weiteren Aspekt der Erfindung umfasst ein Reinigungsgerät einen hierin beschriebenen Generator. Das Reinigungsgerät ist zur Behandlung einer Oberfläche in einem Haushalt eingerichtet. Beispielsweise kann das Reinigungsgerät ein handgehaltenes Gerät oder einen Bodenreinigungsroboter umfassen. Insbesondere kann der Generator dabei in einer Bodendüse des Reinigungsgerät, besonders bei handgehaltenen Geräten, bzw. an einem Gehäuseunterteil des Bodenreinigungsroboters angeordnet sein, und dadurch vorteilhaft sehr kurze Wege ermöglichen.

In einer bevorzugten Ausführungsform ist das Reinigungsgerät zur Reinigung einer Bodenfläche mit dem Reinigungsmittel eingerichtet. Das Reinigungsgerät kann insbesondere ein multifunktionales handgeführtes Bodengerät mit einem Stiel (multi use handstick, MUH) umfassen.

Ein weiterer Aspekt der Erfindung umfasst ein Verfahren zum Bereitstellen eines Reinigungsmittels, wobei das Verfahren Schritte des Zuführens einer ersten Flüssigkeit aus einem ersten Behälter in ein Reaktionsgefäß das Zuführen einer zweiten Flüssigkeit aus einem zweiten Behälter in das Reaktionsgefäß; das Anlegen einer vorbestimmten elektrischen Gleichspannung an Elektroden im Reaktionsgefäß, sodass ein elektrischer Strom durch die Lösung fließt, um mittels einer Redox-Reaktion ein Reinigungsmittel zu bilden; und des Bereitstellens von Flüssigkeit, in der das Reinigungsmittel vorhanden ist, aus dem Reaktionsgefäß umfasst. Dabei wird ein Verhältnis von zugeführter erster Flüssigkeit zu zugeführter zweiter Flüssigkeit in Abhängigkeit einer durch die Elektroden fließenden elektrischen Stroms bestimmt.

Das Verfahren kann mittels einem hierin beschriebenen Generator und insbesondere einem hierin beschriebenen Reinigungsgerät ausgeführt werden. Eine Steuervorrichtung des Generators kann eine elektronische Verarbeitungseinrichtung umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Erfindung wird nun unter Bezug auf die beiliegenden Figuren genauer beschrieben, in denen:
- Figur 1: ein Reinigungsgerät zum Einsatz in einem Haushalt;
- Figur 2: eine Veranschaulichung einer Elektrolyse;
- Figur 3: einen Generator für Reinigungsmittel;
- Figur 4: eine schematische Darstellung einer peristaltischen Pumpe; und
- Figur 5: ein Ablaufdiagramm eines Verfahrens;
darstellt.

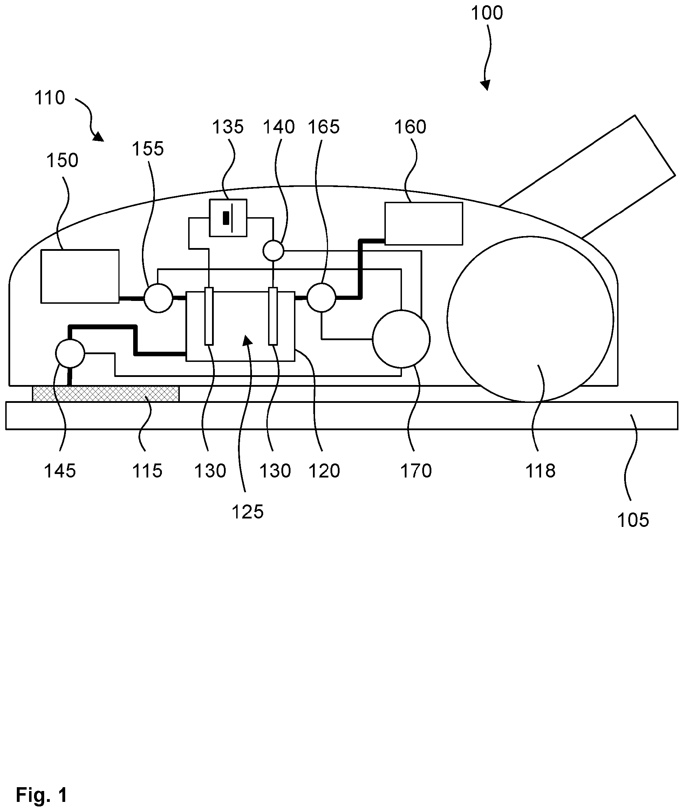

Figur 1 zeigt ein Reinigungsgerät 100 zum Einsatz in einem Haushalt. Das Reinigungsgerät 100 ist dazu eingerichtet, ein Substrat 105 zu bearbeiten, insbesondere eine Bodenfläche, beispielsweise Parkett, Laminat, Estrich oder Linoleum. Zusätzlich zu einer im Folgenden genauer beschriebenen Wischfunktion kann das Reinigungsgerät 100 auch für eine Trockenreinigung einsetzbar sein, beispielsweise durch Saugen oder Kehren. Vorliegend ist das Reinigungsgerät 100 beispielhaft als handgeführte Bodenreinigungsdüse mit einem Stiel ausgeführt. Das Reinigungsgerät 100 kann auch als multifunktionales handgeführtes Bodengerät (multi use handstick, MUH) bezeichnet werden.

Das Reinigungsgerät 100 kann an Stelle einer Handführung auch eine Antriebseinrichtung umfassen und zur autonomen Bearbeitung einer Bodenfläche eingerichtet sein. In noch einer weiteren Ausführungsform kann das Reinigungsgerät 100 ein handgehaltenes Gerät ohne Stiel umfassen, das beispielsweise auch zur Reinigung einer Oberfläche eines Tisches, eines Herdes, eines Fenster- oder Spiegelglases oder einer Fliese verwendet werden kann.

Das Reinigungsgerät 100 umfasst einen Generator 110 zur Bereitstellung eines Reinigungsmittels möglichst unmittelbar am Ort einer durchzuführenden Reinigung. Am Reinigungsgerät 100 ist in einem vorderen Bereich beispielhaft ein Textil 115 zur mechanischen Bearbeitung des Substrats 105 vorgesehen. Bereitgestelltes Reinigungsmittel kann in diesem Bereich ausgegeben werden. In einem hinteren Bereich des Reinigungsgeräts 100 ist beispielhaft ein Stütz- oder Antriebsrad 118 vorgesehen. Über dem Rad 118 ist eine Aufnahme für einen Stiel zu erkennen, mit dem das Reinigungsgerät 100 über das Substrat 105 geführt werden kann.

Der Generator 110 umfasst ein Reaktionsgefäß 120 zur Aufnahme einer wässrigen Lösung 125. Im Reaktionsgefäß 120 sind zwei Elektroden 130 zueinander beabstandet angebracht. Mittels einer Gleichspannungsquelle 135 kann ein elektrischer Strom durch die wässrige Lösung 125 bewirkt werden. Die bereitgestellte Gleichspannung kann eine Kleinspannung umfassen, sodass keine Gefahr für eine Person besteht. Bevorzugt liegt die Gleichspannung unter ca. 12 V, weiter bevorzugt im Bereich von ca. 5 V oder noch niedriger. Die Gleichspannungsquelle 135 kann ein Netzteil umfassen, das mittels eines Anschlusskabels mit einem Stromnetz verbunden werden kann. Alternativ kann ein lokaler Energiespeicher verwendet werden, beispielsweise in Form einer Batterie bzw. eines Akkumulators. Die Gleichspannungsquelle 135 ist bevorzugt dazu eingerichtet, eine Gleichspannung in einer konstanten Höhe bereitzustellen.

In einer Zuleitung zwischen einer der Elektroden 130 und der Gleichspannungsquelle 135 kann ein Stromsensor 140 vorgesehen sein. Der Stromsensor 140 ist dazu eingerichtet, ein Sensorsignal bereitzustellen, das auf die Stärke eines durch die wässrige Lösung 125 fließenden elektrischen Stroms hinweist. Der Stromsensor 140 kann auf eine beliebige Weise implementiert sein, beispielsweise als Shunt-Widerstand oder als thermische Messeinrichtung. In einer anderen Ausführungsform kann ein Magnetfeld bestimmt werden, welches sich auf Grund des fließenden Stroms im Bereich der Zuleitung einstellt. Der Stromsensor 140 kann hierbei beispielsweise einen Hall-Sensor umfassen.

Die Lösung 125 kann mittels einer Ausgabevorrichtung 145 im Bereich des Textils 115 bereitgestellt werden. Die Ausgabevorrichtung 145 kann beispielsweise eine Drossel oder eine Blende umfassen, um einen vorbestimmten Volumenstrom von Flüssigkeit an das Textil 115 zu leiten. Bevorzugt ist die Ausgabevorrichtung 145 steuerbar und insbesondere als Pumpe oder Ventil ausgeführt. Ein durch die Pumpe bzw. das Ventil fließender Volumenstrom an Flüssigkeit ist in manchen Ausführungsformen kontinuierlich oder in mehreren Stufen steuerbar.

Zur Bereitstellung der wässrigen Lösung 125 im Reaktionsgefäß 120 sind ein erster Behälter 150 mit einer ersten Zugabeeinrichtung 155 sowie ein zweiter Behälter 160 mit einer zweiten Zugabeeinrichtung 165 vorgesehen. Im ersten Behälter 150 ist Wasser und im zweiten Behälter 160 ein vorbestimmtes Salz, insbesondere Kochsalz (NaCl), aufgenommen. Das Kochsalz liegt hierbei bevorzugt in Wasser gelöst, also als Kochsalzlösung vor. Die Behälter 150, 160 können zum Nachfüllen durch einen Benutzer des Reinigungsgeräts 100 eingerichtet sein. In den ersten Behälter 150 kann der Benutzer klares Wasser einfüllen.

In den zweiten Behälter 160 kann entweder eine Kochsalzlösung eingefüllt werden oder ebenfalls Wasser und zusätzlich feststoffliches Kochsalz. Eine eingefüllte Kochsalzlösung kann eine vorbestimmte Salinität aufweisen, die beispielsweise in Volumen- oder Gewichtsprozenten Kochsalz in Wasser angegeben sein kann. Beispielsweise enthält eine isotonische Kochsalzlösung 0,9 % Kochsalz in Wasser, was 9 g Kochsalz auf 1000 ml Wasser entsprechen kann. Die Bereitstellung von Reinigungsmittel kann leichter gesteuert werden, wenn die Salinität der Kochsalzlösung im zweiten Behälter 160 bekannt ist.

Die Salinität der Kochsalzlösung im zweiten Behälter 160 kann durch den Benutzer gesteuert werden, indem er Kochsalz und Wasser in einem vorbestimmten Gewichts- oder Volumenverhältnis einfüllt. Dazu kann eine Dosierhilfe vorgesehen sein, beispielsweise ein Messbecher für Salz oder eine Volumenmarkierung am zweiten Behälter 160, um eine vorbestimmte Menge Wasser einzufüllen. Eine bekannte Salinität liegt auch in einer gesättigten Lösung von Kochsalz in Wasser vor. Um eine gesättigte Lösung von Kochsalz herzustellen kann der Benutzer Wasser in den zweiten Behälter 160 einfüllen und mehr Kochsalz zugeben als in dem Wasser gelöst werden kann.

Die Zugabeeinrichtungen 155, 165 sind jeweils dazu eingerichtet, eine vorbestimmte Menge bzw. einen vorbestimmten Volumenstrom von Wasser bzw. Kochsalzlösung in das Reaktionsgefäß 120 zu befördern. Die Zugabeeinrichtungen 155, 165 sind bevorzugt als Pumpe ausgeführt, können aber auch Ventile sein, wenn die Ausgabevorrichtung 145 als Pumpe ausgeführt ist.

Eine Steuervorrichtung 170 ist mit den Zugabeeinrichtungen 155, 165, mit der Ausgabevorrichtung 145 sowie mit dem Stromsensor 140 verbunden. Ferner kann eine Verbindung mit der Gleichspannungsquelle 135 vorgesehen sein. Nicht in Figur 1 dargestellt ist ein optionales Bedienelement, mit dem ein Benutzer eine Anforderung bezüglich einer Menge bereitzustellender Reinigungsflüssigkeit oder einer Konzentration von Reinigungsmittel in der Flüssigkeit ausdrücken kann.

Die Steuervorrichtung 170 kann dazu eingerichtet sein, eine Zufuhr von Wasser und Kochsalzlösung in das Reaktionsgefäß 120 sowie bevorzugt einen Abfluss von wässriger Lösung 125 aus dem Reaktionsgefäß 120 zu steuern. Im Reaktionsgefäß 120 wird ein Gleichstrom durch die wässrige Lösung 125 geleitet, sodass mittels Elektrolyse eine Redox-Reaktion erzwungen wird, bei welcher ein vorbestimmtes Reinigungsmittel gebildet werden kann.

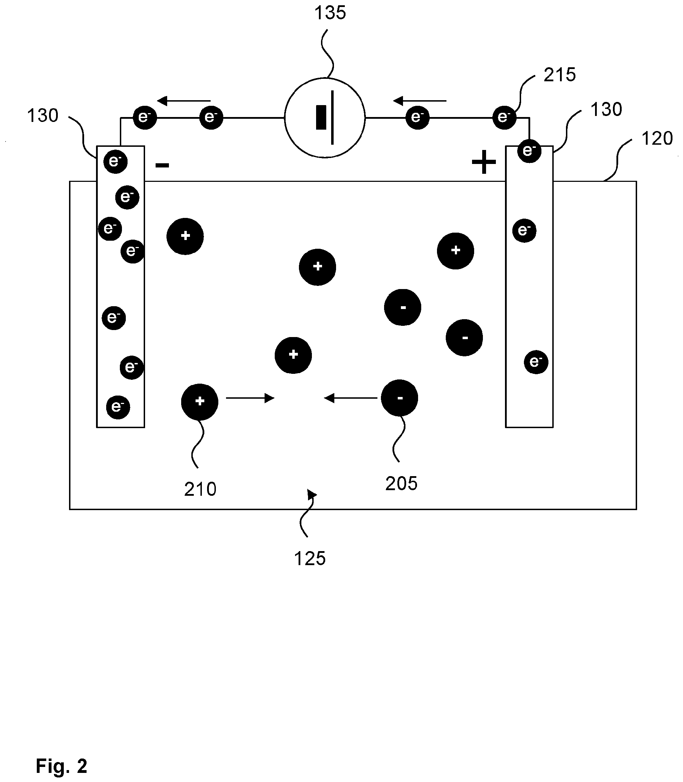

Figur 2 zeigt eine Veranschaulichung einer Elektrolyse. Im Reaktionsgefäß 120 befindet sich die wässrige Lösung 125, die zunächst nur in Wasser gelöstes Kochsalz umfasst. Bei der Lösung des Kochsalzes in Wasser werden negativ geladene Anionen 205 und positiv geladene Kationen 210 gebildet. Wird nun an die Elektroden 130 eine elektrische Gleichspannung angelegt, so werden die Anionen 205 zur einen und die Kationen 210 zur anderen Elektrode 130 bewegt. Dadurch entsteht zwischen den Elektroden 130 eine Potentialdifferenz, die ausgeglichen wird, indem Elektronen 215 von der einen Elektrode 130 durch die Gleichspannungsquelle 135 zur anderen Elektrode 130 fließen.

Ionen 205, 210, die sich im Bereich einer der Elektroden 130 ansammeln, erfahren durch den fließenden elektrischen Strom eine Energiezufuhr, so dass eine oder mehrere Redox-Reaktionen möglich sind. Dabei werden die Ionen 205, 210 in andere Reaktionsprodukte umgebaut, von denen eines das gewünschte Reinigungsmittel umfasst.

Das Wasser (H₂O) aus dem ersten Behälter 150 und das Kochsalz (NaCl) aus dem zweiten Behälter 160 können im Reaktionsgefäß 120 beispielsweise mittels folgender Reaktionen im Reaktionsgefäß 120 umgebaut werden:

2*NaCl +* 2*H₂O* → 2*NaOH* + *N*₂ + *Cl*₂

2*NaOH + Cl₂* → *NaOCl* + *NaCl + H₂O*

Das mittels der zweiten angegebenen Reaktionsgleichung gebildete NaOCl ist auch als Natriumhypochlorit oder Natronbleichlauge bekannt. Es handelt sich dabei um das Natriumsalz der hypochlorigen Säure HCIO. NaOCl hat gute Eigenschaften zur Reinigung und Bindung von Schmutz und kann inaktivierend auf Mikroorganismen wirken.

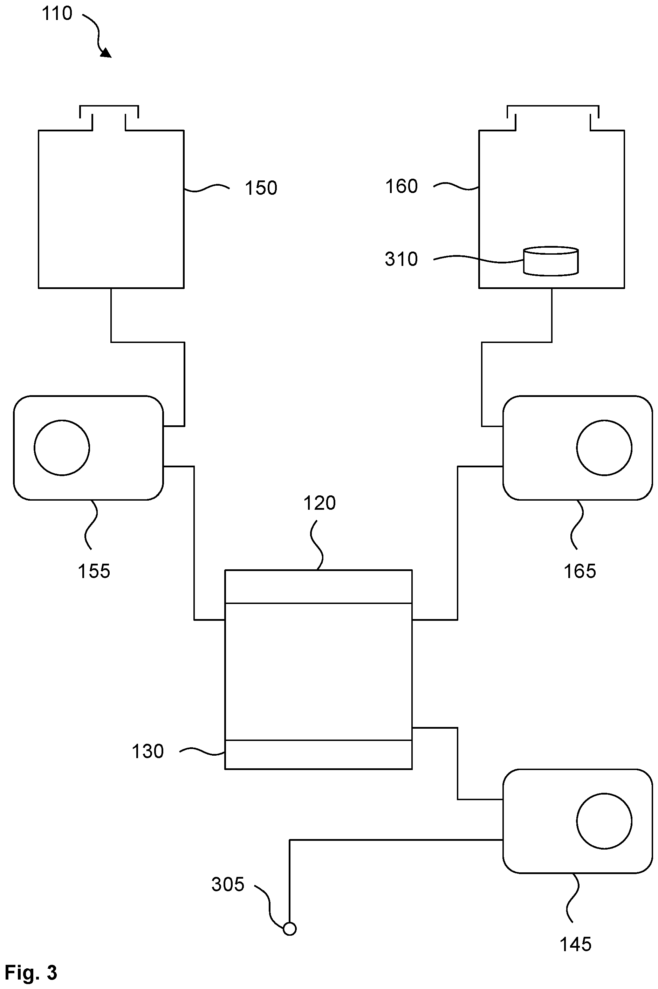

Figur 3 zeigt einen Generator 110 für Reinigungsmittel, vorzugsweise zum Einsatz in einem Reinigungsgerät 100. Der Generator 110 umfasst in der dargestellten Ausführungsform das Reaktionsgefäß 120 mit den Elektroden 130, den ersten Behälter 150, die erste Zugabeeinrichtung 155, den zweiten Behälter 160 und die zweite Zugabeeinrichtung 165. Optional ist eine Ausgabevorrichtung 145 vorgesehen, um Flüssigkeit aus dem Reaktionsgefäß 120 an eine Ausgabeöffnung 305 zu fördern.

Der erste Behälter 150 ist zur Aufnahme von Wasser vorgesehen. Bevorzugt wird klares Wasser verwendet, das beispielsweise aus einer Wasserleitung entnommen sein kann. Es kann auch gereinigtes Wasser, abgekochtes Wasser oder destilliertes Wasser eingefüllt werden. Eine Einfüllöffnung des ersten Behälters 150 ist bevorzugt so gestaltet, dass das Einfüllen einer Flüssigkeit einfach, das Einfüllen eines Festkörpers jedoch schwierig ist. Dazu kann die Einfüllöffnung beispielsweise ein Sieb, ein Gitter oder einen Labyrinthverschluss umfassen.

Der zweite Behälter 160 ist zur Aufnahme einer flüssigen Lösung von Kochsalz in Wasser eingerichtet. In einer Ausführungsform kann fertige Lösung in den zweiten Behälter 160 eingefüllt werden, wobei eine Einfüllöffnung des zweiten Behälters 160 analog der des ersten Behälters ausgeführt sein kann. In einer anderen Ausführungsform ist der zweite Behälter 160 dazu eingerichtet, Wasser und festes Kochsalz 310, beispielsweise in Form einer Tablette, eines Brockens oder von streufähigem Salz aufzunehmen. Die Einfüllöffnung kann entsprechend groß ausgeführt sein, um ein sauberes Einfüllen des Salzes zu erleichtern. Das Kochsalz 310 kann sich dann in dem eingefüllten Wasser auflösen.

In einer weiteren Ausführungsform kann der zweite Behälter 160 dazu eingerichtet sein, von einem Benutzer nur mit Salz befüllt zu werden. Wasser kann aus dem ersten Behälter 150 zugeführt werden, beispielsweise mittels eines Ventils oder einer Pumpe. Optional kann die zweite Zugabeeinrichtung 165 zwischen dem ersten Behälter 150 und dem zweiten Behälter 160 angeordnet werden. In einer weiteren Ausführungsform kann Wasser aus dem ersten Behälter 150 aufgrund von Schwerkraft in den zweiten Behälter 160 laufen. Zwischen dem ersten Behälter 150 und dem zweiten Behälter 160 ist bevorzugt ein Rückschlagventil vorgesehen, sodass möglichst kein Salz 310 in den ersten Behälter 150 gelangt. Alternativ kann auch ein steuerbares Ventil verwendet werden.

Die Zugabeeinrichtungen 155 und 165 sind jeweils bevorzugt als Verdrängerpumpen und weiter bevorzugt als peristaltische Pumpen ausgeführt. Die Steuervorrichtung 170 kann die Zugabeeinrichtungen jeweils dazu ansteuern, eine vorbestimmte Menge bzw. einen vorbestimmten Volumenstrom an Flüssigkeit aus dem jeweiligen Behälter 155, 165 in das Reaktionsgefäß 120 zu bewegen. Die Ausgabevorrichtung 145 kann ebenfalls eine Verdrängerpumpe und weiter bevorzugt eine peristaltische Pumpe umfassen.

Das Reaktionsgefäß 120 weist bevorzugt keine anderen Öffnungen als die Verbindungen zu den Behältern 150, 160 und die Ausgabevorrichtung 145 auf. Ein Volumenstrom zugeführter Flüssigkeit entspricht daher einem Volumenstrom abgeführter Flüssigkeit. In einer Ausführungsform kann auf eine der Zugabeeinrichtungen 155, 165 oder die Ausgabevorrichtung 145 verzichtet werden und der betreffende Volumenstrom kann aufgrund dieses Zusammenhangs automatisch gesteuert werden.

Die zu- und abgeführten Volumenströme können einander besonders gut entsprechen, wenn das Reaktionsgefäß 120 vollständig mit Flüssigkeit gefüllt ist. Zum Fluten und zum Verdrängen von Gas aus dem Reaktionsgefäß 120 ist bevorzugt, dass ein Rückfluss von Flüssigkeit in einen der Behälter 150, 160 mittels eines Rückschlagventils verhindert ist, falls an dieser Stelle keine Zugabeeinrichtung 155, 165 vorgesehen ist, die einen Rückfluss verhindert. Falls erforderlich kann ein Rückschlagventil den Rückfluss in einen Behälter 150, 160 verhindern. In einer besonders bevorzugten Ausführungsform sind beide Zugabeeinrichtungen 155, 165 vorhanden und die Ausgabeöffnung 305 kann entfallen. Ein Rückschlagventil kann auch zwischen dem Reaktionsgefäß 145 und der Ausgabeöffnung 305 vorgesehen sein.

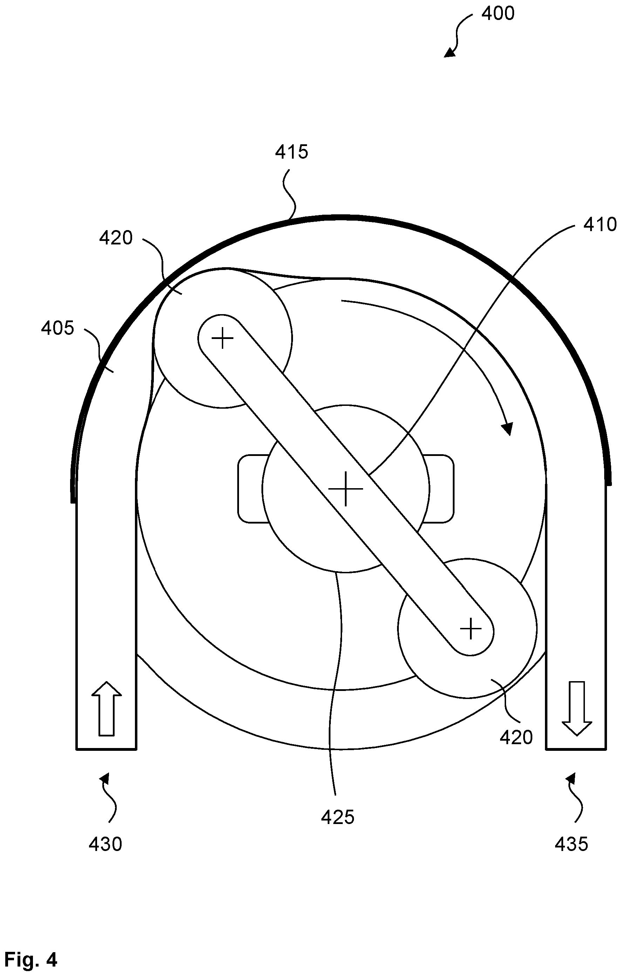

Figur 4 zeigt eine schematische Darstellung einer beispielhaften peristaltischen Pumpe 400, die eine der Zugabeeinrichtungen 155, 165 oder die Ausgabevorrichtung 145 bilden kann. Die Pumpe 400 umfasst einen Schlauch 405, der in einer Schleife um eine Achse 410 gelegt ist. Auf einer radialen Außenseite des Schlauchs 405 ist eine Begrenzung 415 vorgesehen, die sich auf einem Umfang um die Achse 410 erstreckt. In einer Richtung entlang der Achse 410 kann die Begrenzung 415 beispielsweise gerade verlaufen. Auf einer radialen Innenseite des Schlauchs 405 ist sind zwei Rollen 420 angebracht, die auf einem Umfang um die Achse 410 gehalten sind. Die Rollen 420 liegen einander gegenüber; bei einer größeren Anzahl Rollen 420 sind diese bevorzugt gleichmäßig auf dem Umfang verteilt. Anstelle von Rollen 420 können auch Gleitschuhe verwendet werden. Der Schlauch 405 wird zwischen einer Rolle 420 und der Begrenzung 415 zusammengedrückt, sodass eine Engstelle gebildet ist, die von Flüssigkeit im Schlauch 405 nicht passiert werden kann.

Die Rolle 420 kann mittels eines Elektromotors 425 auf dem Umfang um die Achse 410 bewegt werden, sodass die Engstelle verschoben und Flüssigkeit im Schlauch 410 entlang bewegt wird. In der Darstellung von Figur 4 kann Flüssigkeit vor einem links dargestellten Saugseite 430 zu einer rechts dargestellten Druckseite 435 gefördert werden, wenn die Rolle 420 im Uhrzeigersinn gedreht wird. Wird die Drehrichtung umgekehrt, so ändert sich auch die Förderrichtung.

Die peristaltische Pumpe 400 ist selbstsperrend und unempfindlich gegenüber aggressiven Medien. Der Schlauch 405 kann direkt zwischen dem Reaktionsgefäß 120 und einem Behälter 150, 160 oder der Ausgabeöffnung 305 verlaufen. Der Schlauch 405 kann aus einen langlebigen und flexiblen Material wie Silikon herstellbar sein.

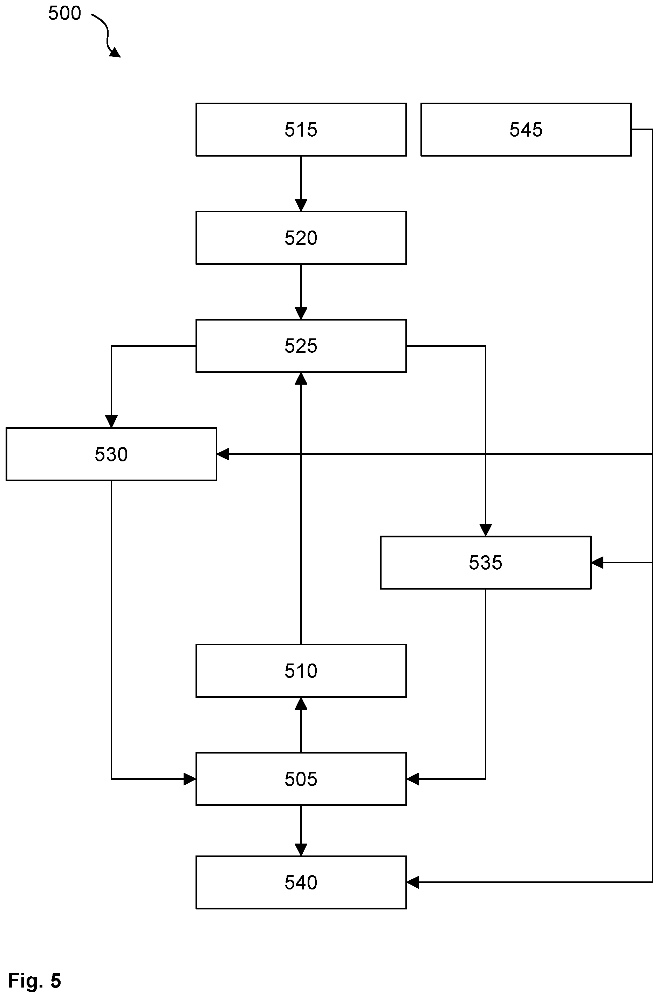

Figur 5 zeigt ein Ablaufdiagramm eines Verfahrens 500 zur Steuerung eines Generators 110, insbesondere im Rahmen eines Reinigungsgeräts 100. In einem Schritt 505 findet eine Elektrolyse statt, in welcher eine wässrige Lösung von Kochsalz in eine Redox-Reaktion gezwungen wird, um Reinigungsmittel in Form von Natriumhypochlorit bereitzustellen. Die Stärke eines elektrischen Ist-Stroms, der im Rahmen der Elektrolyse durch die wässrige Lösung 125 fließt, kann in einem Schritt 510 bestimmt werden. Die Höhe des Ist-Stroms wird bevorzugt mittels des Stromsensors 140 bestimmt, der zwischen einer Elektrode 130 und der Gleichspannungsquelle 135 angeordnet sein kann.

In einem Schritt 515 kann eine gewünschte Konzentration von Reinigungsmittel in Flüssigkeit bestimmt werden. Dazu kann ein Benutzerwunsch erfasst werden, der beispielsweise mittels einer Eingabevorrichtung ausgedrückt sein kann. Es können unterschiedliche Konzentrationen vorbestimmt sein, von denen der Benutzer eine auswählen kann. Eine höchste anwählbare Konzentration kann in Abhängigkeit geltender Bedingungen im Bereich des Reaktionsgefäßes 120 bestimmt sein.

In einem Schritt 520 kann eine Soll-Stromstärke bestimmt werden, die der gewünschten Konzentration zugeordnet ist. Diese Zuordnung kann beispielsweise tabellarisch, formelhaft, mittels eines Kennfeldes oder auf eine andere Weise bestimmt sein.

In einem Schritt 525 können die im Schritt 510 bestimmte Ist-Stromstärke und die im Schritt 520 bestimmte Soll-Stromstärke miteinander verglichen werden. Entsprechen die Stromstärken einander ausreichend genau, so liegt eine Konzentration von Reinigungsmittel in der wässrigen Lösung 125 auf dem gewünschten Niveau. Übersteigt die Ist-Stromstärke die Soll-Stromstärke um ein vorbestimmtes Maß, so ist die Konzentration von Reinigungsmittel in der wässrigen Lösung 125 zu hoch. In diesem Fall kann in einem Schritt 530 Wasser aus dem ersten Behälter 150 in das Reaktionsgefäß 120 zugegeben werden. Das zugegebene Wasser kann die elektrolytische Reaktion im Schritt 505 beeinflussen, sodass die Ist-Stromstärke wieder absinkt.

In entsprechender Weise kann im Schritt 525 bestimmt werden, dass die Soll-Stromstärke um einen vorbestimmten Betrag größer als die Ist-Stromstärke ist. In diesem Fall kann in einem Schritt 535 Salz aus dem zweiten Behälter 160 in das Reaktionsgefäß 120 zugeführt werden. Dadurch kann eine Konzentration von Salz in der Lösung 125 ansteigen, sodass die im Schritt 505 ablaufende elektrolytische Reaktion beeinflusst werden kann. Durch die gesteigerte Salinität der wässrigen Lösung 125 können mehr freie Ionen verfügbar sein, um an der Redox-Reaktion teilzunehmen. In der Folge kann die Ist-Stromstärke ansteigen. Die Zufuhr des Salzes kann hierbei als Flüssigkeit, insbesondere als in Wasser gelöstes Salz, oder als Feststoff erfolgen.

Das Verfahren 500 kann ausgeführt werden, um eine vorbestimmte Menge wässriger Lösung 125 mit einer vorbestimmten Konzentration von Reinigungsmittel bereitzustellen. Die Gleichspannungsquelle 135 kann dann abgeschaltet werden, und die bereitgestellte Lösung 125 kann durch Abfuhr in einem Schritt 540 zur Reinigung des Substrats 105 verwendet werden. Ist ein bereitgestellter Vorrat an Lösung 125 erschöpft, so kann das Reaktionsgefäß 120 erneut mit Wasser und Salz beschickt und die Gleichspannungsquelle 135 wieder eingeschaltet werden, um eine weitere vorbestimmte Menge gelösten Reinigungsmittels bereitzustellen.

In einer anderen Ausführungsform kann das Verfahren 500 auch kontinuierlich ausgeführt werden, dabei kann ein variabler oder kontinuierlicher Abfluss von Flüssigkeit 540 aus dem Reaktionsgefäß 120 durch die Ausgabevorrichtung 145 stets durch einen entsprechenden Zufluss von Wasser und Salz kompensiert werden. Ein Volumenstrom von Flüssigkeit, der das Reaktionsgefäß 120 verlässt, kann durch einen Benutzer einstellbar sein. In einem Schritt 545 kann eine Anforderung für einen vorbestimmten Volumenstrom bestimmt werden. Die Zugabe von Wasser im Schritt 530 und/oder Salz im Schritt 535 in das Reaktionsgefäß 120 können in Abhängigkeit des bestimmten Volumenstroms gesteuert werden. Es ist zu beachten, dass hierbei nur eine kombinierte Menge von Wasser und Salz bestimmt wird, die dem Reaktionsgefäß 120 zugeführt werden, während ein Verhältnis zugeführter Substanzen in Abhängigkeit des Vergleichs von Stromstärken im Schritt 525 gesteuert werden kann.

### Bezugszeichen

- 100: Reinigungsgerät
- 105: Substrat
- 110: Generator
- 115: Textil, Kissen
- 118: Rad
- 120: Reaktionsgefäß
- 125: wässrige Lösung
- 130: Elektrode
- 135: Gleichspannungsquelle
- 140: Stromsensor
- 145: Ausgabevorrichtung
- 150: erster Behälter
- 155: erste Zugabeeinrichtung
- 160: zweiter Behälter
- 165: zweite Zugabeeinrichtung
- 170: Steuervorrichtung

- 205: Anion
- 210: Kation
- 215: Elektron

- 305: Ausgabeöffnung
- 310: Salz

- 400: Pumpe
- 405: Schlauch
- 410: Achse
- 415: Begrenzung
- 420: Rolle
- 425: Elektromotor
- 430: Saugseite
- 435: Druckseite
- 500: Verfahren
- 505: Elektrolyse
- 510: Ist-Stromstärke bestimmen
- 515: gewünschte Konzentration bestimmen
- 520: Soll-Stromstärke bestimmen
- 525: Stromstärken vergleichen
- 530: Wasser zugeben
- 535: Salz zugeben
- 540: Flüssigkeit abführen
- 545: gewünschte Menge bestimmen

## Patentansprüche

1. Generator (110) für Reinigungsmittel, wobei der Generator (110) folgende Elemente umfasst:
- einen ersten Behälter (150) zur Aufnahme einer ersten Flüssigkeit;
- einen zweiten Behälter (160) zur Aufnahme einer zweiten Flüssigkeit;
- ein Reaktionsgefäß (120) mit Elektroden (130) zur elektrolytischen Erzeugung von Reinigungsmittel auf der Basis der ersten und der zweiten Flüssigkeit;
- eine Steuervorrichtung (170) zur Führung von erster und zweiter Flüssigkeit in das Reaktionsgefäß (120).

2. Generator (110) nach Anspruch 1, ferner umfassend eine erste Zugabeeinrichtung (155) zur Dosierung erster Flüssigkeit aus dem ersten Behälter (150) in das Reaktionsgefäß (120).

3. Generator (110) nach Anspruch 1 oder 2, ferner umfassend eine zweite Zugabeeinrichtung (165) zur Dosierung zweiter Flüssigkeit aus dem zweiten Behälter (160) in das Reaktionsgefäß (120).

4. Generator (110) nach Anspruch 2 oder 3, wobei eine Zugabeeinrichtung (155, 165) eine Verdrängerpumpe, eine Strömungspumpe und/oder eine Strahlpumpe umfasst.

5. Generator (110) nach Anspruch 4, wobei eine Zugabeeinrichtung (155, 165) eine Membranpumpe oder eine peristaltische Pumpe umfasst.

6. Generator (110) nach einem der vorangehenden Ansprüche, ferner umfassend eine mit dem Reaktionsgefäß (120) verbundene Ausgabevorrichtung (145) zur Bereitstellung eines vorbestimmten Volumenstroms von Flüssigkeit mit Reinigungsmittel aus dem Reaktionsgefäß (120).

7. Generator (110) nach Anspruch 6, wobei die Ausgabevorrichtung (145) eine Verdrängerpumpe, eine Strömungspumpe und/oder eine Strahlpumpe umfasst.

8. Generator (110) nach einem der vorangehenden Ansprüche, wobei der zweite Behälter (160) dazu eingerichtet ist, eine Flüssigkeit und ein feststoffliches Salz (310) aufzunehmen.

9. Reinigungsgerät (100), umfassend einen Generator (110) nach einem der Ansprüche 1 bis 8.

10. Reinigungsgerät (100) nach Anspruch 9, wobei das Reinigungsgerät (100) zur Reinigung einer Bodenfläche (105) mit dem Reinigungsmittel eingerichtet ist.

11. Verfahren (500) zum Bereitstellen eines Reinigungsmittels, wobei das Verfahren folgende Schritte umfasst:
- Zuführen (530) einer ersten Flüssigkeit aus einem ersten Behälter (150) in ein Reaktionsgefäß (120);
- Zuführen (535) einer zweiten Flüssigkeit aus einem zweiten Behälter (160) in das Reaktionsgefäß (120);
- Anlegen (505) einer vorbestimmten elektrischen Gleichspannung an Elektroden (130) im Reaktionsgefäß (120), sodass ein elektrischer Strom durch die Lösung fließt, um mittels einer Redox-Reaktion ein Reinigungsmittel zu bilden; und
- Bereitstellen (540) von Flüssigkeit, in der das Reinigungsmittel gebildet ist, aus dem Reaktionsgefäß (120);
- wobei ein Verhältnis von zugeführter erster Flüssigkeit zu zugeführter zweiter Flüssigkeit in Abhängigkeit einer durch die Elektroden (130) fließenden elektrischen Stroms bestimmt wird.
